(19) **Europäisches Patentamt / European Patent Office / Office européen des brevets**

(11) **EP 4 778 724 A1**

(12) **EUROPEAN PATENT APPLICATION**
published in accordance with Art. 153(4) EPC

(43) Date of publication:
**22.07.2026 Bulletin 2026/30**

(21) Application number: **24865118.4**

(22) Date of filing: **05.08.2024**

(51) International Patent Classification (IPC):
**B32B 27/36** (2006.01)    **B05D 7/24** (2006.01)
**C08L 67/04** (2006.01)

(52) Cooperative Patent Classification (CPC):
**B05D 7/24; B32B 27/36; C08L 67/04**

(86) International application number:
**PCT/JP2024/027910**

(87) International publication number:
**WO 2025/057612 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.09.2023   JP 2023146735**

(71) Applicant: **Kaneka Corporation**
**Osaka-shi, Osaka 530-8288 (JP)**

(72) Inventors:
• **FUJITA, Masayuki**
  **Osaka 566-0072 (JP)**
• **KUSAKABE, Itsuki**
  **Osaka 566-0072 (JP)**
• **OKADA, Yasunori**
  **Osaka 566-0072 (JP)**

(74) Representative: **Vossius & Partner**
**Patentanwälte Rechtsanwälte mbB**
**Siebertstraße 3**
**81675 München (DE)**

(54) **METHOD FOR PRODUCING LAMINATE AND METHOD FOR PRODUCING MOLDED ARTICLE**

(57)    Provided is a method for producing a laminate including a substrate layer and a coating layer located on at least one side of the substrate layer. An aqueous coating liquid containing a poly(3-hydroxyalkanoate) resin composition is applied to a substrate to form a coat, and the coat is heated until the surface temperature of the coat reaches 170°C or higher to form the coating layer. The coating layer exhibits a peak top temperature (Tmb) in the range of 155 to 175°C on a crystalline melting curve obtained by differential scanning calorimetry.

**EP 4 778 724 A1**

## Description

## Technical Field

The present invention relates to a method for producing a laminate including a resin layer containing a poly(3-hydroxyalkanoate) resin, and further relates to a method for producing a molded article including the laminate.

## Background Art

In recent years, environmental problems associated with waste plastics have become an issue of great concern. In particular, waste plastics have caused serious marine pollution, and there is a demand for widespread use of biodegradable plastics which are degradable in the natural environment.

Various such biodegradable plastics are known. Among them, poly(3-hydroxyalkanoate) resins are thermoplastic polyesters produced and accumulated as energy storage substances in the cells of many types of microorganisms. These resins are biodegradable in seawater as well as in soil, and are therefore attracting attention as materials that can be a solution to the problems mentioned above.

A laminate including a biodegradable paper substrate and a layer located on the paper substrate and containing a poly(3- hydroxyalkanoate) resin as a main component is very promising in terms of environmental protection because both the resin and the substrate have high biodegradability.

Patent Literature 1 is directed to a laminate including a substrate layer and a coating layer containing a poly(3-hydroxybutyrate) resin, and describes imparting specific melting characteristics to the coating layer in order to improve the heat-sealability of the laminate in molding processes. With respect to the production of the laminate, the literature describes applying an aqueous coating liquid containing a poly(3-hydroxybutyrate) resin to the paper substrate and heating the applied coating liquid at 130 to 170°C to form the coating layer.

Patent Literature 2 describes applying an aqueous coating liquid containing a poly(3-hydroxybutyrate) resin to a paper substrate, heating the applied coating liquid to a temperature equal to or higher than the melting point of the resin to form a resin layer, and further spraying the surface of the paper substrate layer with a cooling medium. The literature states that the resulting laminate is resistant to blocking between its different portions.

## Citation List

## Patent Literature

PTL 1: WO 2022/059592 A1
PTL 2: Japanese Laid-Open Patent Application Publication No. 2022-185708

## Summary of Invention

## Technical Problem

The production method described in Patent Literature 1 enables the resulting laminate to exhibit improved heat-sealability in molding processes. However, when the laminate is wound into a roll, blocking may occur between different portions of the laminate (that is, the paper substrate and the resin layer come into contact with and stick to each other), thereby hindering unwinding of the roll.

The production method described in Patent Literature 2 makes it possible to prevent such blocking. However, the resulting laminate may lack sufficient water resistance or oil resistance. Thus, for example, it is difficult to use the laminate as a packaging material for packaging an article that contains water or oil.

In view of the above circumstances, the present invention aims to provide a method for producing a laminate including a substrate layer and a resin layer by applying an aqueous coating liquid containing a poly(3-hydroxyalkanoate) resin to the substrate layer, the method being adapted to prevent blocking between different portions of the laminate and impart good water resistance and oil resistance to the laminate.

## Solution to Problem

The present inventors have found that the problem described above can be solved by heating a coat of a poly(3-hydroxyalkanoate) resin-containing aqueous coating liquid applied to a substrate layer until the surface temperature of the coat reaches a specific temperature, and by controlling the composition of the poly(3-hydroxyalkanoate) resin such that the resulting coating layer exhibits a specific melting behavior. Based on this finding, the inventors have completed the present invention.

Specifically, the present invention relates to a laminate production method for producing a laminate including a substrate layer and a coating layer located on at least one side of the substrate layer, the method including the steps of:

applying an aqueous coating liquid containing a poly(3-hydroxyalkanoate) resin composition to a substrate to form a coat; and

heating the coat until a surface temperature of the coat reaches 170°C or higher to form the coating layer, wherein the coating layer exhibits a peak top temperature (Tmb) in a range of 155 to 175°C on a crystalline melting curve obtained by differential scanning calorimetry.

The present invention further relates to a molded article production method including the steps of:

producing a laminate by the laminate production method described above; and
subjecting at least a portion of the coating layer to thermal fusion.

**Advantageous Effects of Invention**

The present invention can provide a method for producing a laminate including a substrate layer and a resin layer by applying an aqueous coating liquid containing a poly(3-hydroxyalkanoate) resin to the substrate layer, the method being adapted to prevent blocking between different portions of the laminate and impart good water resistance and oil resistance to the laminate.

The laminate produced according to the present invention includes a coating layer capable of bonding by heat sealing, and thus can exhibit good bond strength.

According to the present invention, the step of spraying the surface of a substrate layer with water as a cooling medium, which is described in Patent Literature 2, can be omitted or simplified. This eliminates the need to adjust the water content of the substrate (the need for drying) after water spraying, and makes it possible to avoid problems such as wrinkle formation and winding failure arising from water spraying or drying.

**Description of Embodiments**

Hereinafter, embodiments of the present invention will be described. The present invention is not limited to the embodiments described below.

A production method according to one embodiment of the present disclosure is a method for producing a laminate. The laminate includes at least a substrate and a coating layer formed on one or both sides of the substrate. In a preferred aspect, the entire laminate exhibits biodegradability.

The coating layer may be located directly on the substrate or may be located over the substrate with another layer interposed between the coating layer and the substrate. Preferably, the coating layer is located directly on the substrate.

(Substrate)

The material forming the substrate is not limited to a particular type, but is desirably biodegradable. Examples of the substrate include a layer of paper, a layer of cellophane, a layer of cellulose ester, a layer of polyvinyl alcohol, a layer of polyamino acid, a layer of polyglycolic acid, a layer of pullulan, and any of these layers on which an inorganic substance such as aluminum or silica has been vapor-deposited. A layer of paper is preferred because it has high heat resistance and is inexpensive.

Paper is a sheet made primarily of pulp. A paper substrate can be obtained by a papermaking process using a papermaking material containing pulp mixed with a loading material and various auxiliary agents.

Paper that can be used as a paper substrate is not limited to a particular type, and examples include cup paper, kraft paper, high-quality paper, coated paper, tissue paper, glassine paper, and paperboard.

Examples of pulp include, but are not limited to: chemical pulp such as leaf bleached kraft pulp (LBKP), needle bleached kraft pulp (NBKP), leaf unbleached kraft pulp (LUKP), needle unbleached kraft pulp (NUKP), and sulfite pulp; mechanical pulp such as stone-ground pulp and thermomechanical pulp; wood fibers such as deinked pulp and waste paper pulp; and non-wood fibers such as those obtained from kenaf, bamboo, and hemp. Any of these types of pulp may be used in any proportion as appropriate.

Among the above examples, chemical or mechanical pulp derived from wood fibers is preferably used, and chemical pulp derived from wood fibers is more preferably used. This is because, for example, the use of such pulp offers the following advantages: foreign matter is less likely to enter the paper; the paper is less susceptible to discoloration over time when recycled as a waste paper material; and the paper has a high degree of whiteness and hence presents a surface appearance suitable for printing, thereby enhancing the utility of the laminate, particularly for use as a packaging material. Specifically, the amount of chemical pulp such as LBKP or NBKP in the total pulp is preferably 80% or more and particularly preferably 100%.

Examples of loading materials include, but are not limited to: inorganic loading materials such as talc, kaolin, calcined kaolin, clay, ground calcium carbonate, precipitated calcium carbonate, white carbon, zeolite, magnesium carbonate, barium carbonate, titanium dioxide, zinc oxide, silicon oxide, amorphous silica, aluminum hydroxide, calcium hydroxide, magnesium hydroxide, zinc hydroxide, barium sulfate, and calcium sulfate; and organic loading materials such as urea-formalin resins, polystyrene resins, phenolic resins, and microballoons. Such a loading material is not an essential ingredient and need not necessarily be used.

Examples of various auxiliary agents include, but are not limited to: sizing agents such as rosin, alkyl ketene dimers (AKDs), and alkenyl succinic anhydrides (ASAs); dry paper strengthening agents such as polyacrylamide polymers, polyvinyl alcohol polymers, cationic starch, various types of modified starch, urea-formalin resins, and melamine-formalin resins; wet paper strengthening agents; retention aids; filterability improvers; coagulants; aluminum sulfate; bulking agents; dyes; fluorescent brighteners; pH adjusters; anti-foaming agents; ultraviolet protective agents; anti-fading agents; pitch control agents; and slime control agents. Any of these auxiliary agents may be selected and used as necessary.

The surface of the paper may be treated with any of various chemicals. Examples of such chemicals include, but are not limited to, oxidized starch, hydroxyethyl etherified starch, enzyme-modified starch, polyacrylamide, polyvinyl alcohol, surface sizing agents, waterproofing agents, water retention agents, thickeners, and lubricants. One chemical may be used alone or two or more chemicals may be used in combination. These chemicals may be used in combination with a pigment.

Examples of pigments include, but are not limited to: inorganic pigments such as kaolin, clay, engineered kaolin, delaminated clay, ground calcium carbonate, precipitated calcium carbonate, mica, talc, titanium dioxide, barium sulfate, calcium sulfate, zinc oxide, silicic acid, silicate salts, colloidal silica, and satin white; and organic pigments such as solid, hollow, and core-shell pigments. One pigment may be used alone or two or more pigments may be used in combination.

The grammage of the substrate, in particular the paper substrate, can be selected as appropriate depending on factors such as the desired quality of the substrate and the intended use of the laminate. The grammage of the substrate is preferably from 40 to 400 g/m$^2$ and more preferably from 50 to 350 g/m$^2$. When the laminate is used as wrapping paper, a paper bag, a lidding material, a paper mat, a packaging material such as a soft packaging material, or a poster for outdoor use, the grammage of the substrate is even more preferably from 40 to 150 g/m$^2$. The term "soft packaging material" refers to a flexible packaging material made with thin paper having a grammage of about 40 to about 100 g/m$^2$. When the laminate is used as a piece of paper tableware such as a paper cup, a paper box, a paper plate, or a paper tray, as a lidding material, or as any other kind of paper container, the grammage of the substrate is even more preferably from 150 to 400 g/m$^2$.

The density of the substrate, in particular the paper substrate, can be selected as appropriate depending on factors such as the desired quality and handleability of the substrate. In general, the density of the substrate is preferably from 0.5 to 1.0 g/cm$^3$.

The method for producing the substrate is not limited to a particular technique. Likewise, the production of the paper substrate (papermaking) is not limited to using a particular method, and can be carried out using any means selected as appropriate from known papermaking machines such as a Fourdrinier machine, a cylinder machine, a short-wire machine, and a twin-wire machine such as a gap former machine or hybrid former (on-top former) machine. The pH in papermaking may be in an acidic region (acidic papermaking), a quasi-neutral region (quasi-neutral papermaking), a neutral region (neutral papermaking), or an alkaline region (alkaline papermaking). After papermaking is performed in an acidic region, the surface of the paper layer may be coated with an alkaline chemical. The paper substrate may be a single-layer substrate or may be a multilayer substrate composed of two or more layers.

When the surface of the paper substrate is treated with a chemical, the surface treatment is not limited to using a particular method and can be performed by means of any known coating device such as a rod metering size press, a pond size press, a gate roll coater, a spray coater, a blade coater, or a curtain coater.

(Coating Layer)

The coating layer formed on at least one side of the substrate contains at least a poly(3-hydroxyalkanoate) resin (hereinafter also referred to as a "P3HA"). One P3HA may be used alone, or two or more P3HAs may be used in combination. The coating layer may contain only a P3HA as its resin component or may further contain another resin. The other resin used may be a biodegradable resin as described later.

The term "poly(3-hydroxyalkanoate) resin" refers to any polymer containing at least a 3-hydroxyalkanoic acid as a monomer unit. Examples of 3-hydroxyalkanoic acids constituting P3HAs include, but are not limited to, 3-hydroxybutyric acid, 3-hydroxypropionic acid, 3-hydroxypentanoic acid, 3-hydroxyhexanoic acid, 3-hydroxyheptanoic acid, and 3-hydroxyoctanoic acid. The P3HA used may be a homopolymer or a copolymer containing two or more types of monomer units.

The P3HA may be a copolymer whose monomer units include at least one of the above 3-hydroxyalkanoic acids and another hydroxyalkanoic acid (e.g., 4-hydroxyalkanoic acid such as 4-hydroxybutyric acid).

The coating layer preferably contains 50 wt% or more, more preferably 70 wt% or more, even more preferably 80 wt% or more, still more preferably 90 wt% or more, of a P3HA. By containing a P3HA as a main component, the coating layer can exhibit good biodegradability.

The P3HA is preferably a poly(3-hydroxybutyrate) resin (hereinafter also referred to as a "P3HB").

The term "P3HB" refers to a homopolymer consisting solely of 3-hydroxybutyrate units and/or a copolymer containing 3-hydroxybutyrate units and other hydroxyalkanoate units. In terms of biodegradability in seawater, it is preferable that the coating layer contain a copolymer containing 3-hydroxybutyrate units and other hydroxyalkanoate units.

The copolymerization that yields the copolymer is not limited to a particular mode and may be random copolymerization, alternating copolymerization, block copolymerization, or graft copolymerization. In general, microbially produced copolymers are random copolymers.

Examples of hydroxyalkanoic acids forming the other hydroxyalkanoate units include, but are not limited to, 4-hydroxybutyric acid, 3-hydroxypropionic acid, 3-hydroxypentanoic acid, 3-hydroxyhexanoic acid, 3-hydroxyheptanoic acid, and 3-hydroxyoctanoic acid.

Specific examples of P3HBs include poly(3-hydroxybutyrate) abbreviated as PHB, poly(3-hydroxybutyrate-co-3-hydroxyhexanoate) abbreviated as PHBH, poly(3-hydroxybutyrate-co-3-hydroxyvalerate) abbreviated as P3HB3HV, poly(3-hydroxybutyrate-co-4-hydroxybutyrate) abbreviated as P3HB4HB, poly(3-hydroxybutyrate-co-3-hydroxyoctanoate) abbreviated as P3HB3HO, poly(3-hydroxybutyrate-co-3-hydroxyoctadecanoate) abbreviated as P3HB3HOD, poly(3-hydroxybutyrate-co-3-hydroxydecanoate) abbreviated as P3HB3HD, and poly(3-hydroxybutyrate-co-3-hydroxyvalerate-co-3-hydroxyhexanoate) abbreviated as P3HB3HV3HH. Among these, PHB, PHBH, P3HB3HV, and P3HB4HB are preferred since they are easy to industrially produce. One P3HB may be used alone, or two or more P3HBs may be used in combination.

The coating layer preferably contains 50 wt% or more, more preferably 70 wt% or more, even more preferably 80 wt% or more, still more preferably 90 wt% or more, of a P3HB. By containing a P3HB as a main component, the coating layer can exhibit good biodegradability.

Among P3HBs, PHBH is particularly preferred for the following reasons: its melting point and crystallinity can be changed by varying the proportions of the repeating units, and thus its physical properties such as Young's modulus and heat resistance can be adjusted and controlled to levels intermediate between those of polypropylene and polyethylene; and PHBH is a plastic that is easy to industrially produce and has useful physical properties.

To possess the melting characteristics described later, the coating layer preferably contains a poly(3-hydroxybutyrate) (A) as a P3HA. The inclusion of the poly(3-hydroxybutyrate) (A) ensures that the coating layer exhibits a peak top temperature (Tmb) in the range of 155 to 175°C as described later and that solidification following melting of the resin component proceeds rapidly in a below-described coat heating step. As a result, blocking of the laminate can be prevented.

The term "poly(3-hydroxybutyrate) (A)" refers to a homopolymer consisting solely of 3-hydroxybutyrate units or a polymer containing a small proportion of other hydroxyalkanoate units in addition to 3-hydroxybutyrate units. Specifically, the proportion of 3-hydroxybutyrate units in the total monomers constituting the poly(3-hydroxybutyrate) (A) is preferably more than 99 mol% and up to 100 mol%.

The hydroxyalkanoate units other than 3-hydroxybutyrate units that may be contained in the poly(3-hydroxybutyrate) (A) are not limited to a particular type, and may be any hydroxyalkanoate units copolymerizable with 3-hydroxybutyrate units. Examples include 3-hydroxyalkanoate units other than 3-hydroxybutyrate units and hydroxyalkanoate units other than 3-hydroxyalkanoate units (such as 4-hydroxyalkanoate units). Particularly preferred are 3-hydroxyhexanoate units.

The weight-average molecular weight of the poly(3-hydroxybutyrate) (A) is not limited to a particular range. In order to ensure both ease of application of the coating liquid and good mechanical properties of the coating layer, the weight-average molecular weight is preferably from $10 \times 10^4$ to $40 \times 10^4$ and more preferably from $20 \times 10^4$ to $35 \times 10^4$.

The weight-average molecular weight (hereinafter also referred to as "Mw") of the poly(3-hydroxybutyrate) (A) can be determined as a polystyrene-equivalent molecular weight measured by gel permeation chromatography (GPC; "Shodex GPC-101" manufactured by Showa Denko K.K.) using a polystyrene gel ("Shodex K-804" manufactured by Showa Denko K.K.) as a column and chloroform as a mobile phase.

The amount of the poly(3-hydroxybutyrate) (A) in the coating layer is preferably from 12 to 25 wt% of the total poly(3-hydroxyalkanoate) resin component contained in the coating layer in order to both prevent blocking and ensure good water resistance and oil resistance. In terms of blocking prevention, the amount is more preferably 13 wt% or more, even more preferably 14 wt% or more, and particularly preferably 15 wt% or more. In terms of oil resistance improvement, the amount is preferably 24 wt% or less, more preferably 23 wt% or less, and even more preferably 22 wt% or less.

To possess the melting characteristics described later, it is preferable for the coating layer to further contain, in addition to the poly(3-hydroxybutyrate) (A), a poly(3-hydroxybutyrate) copolymer (B) containing 3-hydroxybutyrate units and other hydroxyalkanoate units. The inclusion of the copolymer (B) enables the coating layer to exhibit a peak top temperature (Tma) in the range of 100 to 155°C as described later, and allows the resin component to readily melt in the below-described coat heating step, thereby making the coating layer more likely to become uniform as a result of the heating. This can enhance the water resistance and oil resistance of the laminate.

Specific examples of the copolymer (B) include the copolymers previously mentioned, among which poly(3-hydroxybutyrate-co-3-hydroxyhexanoate) is preferred.

The proportion of the other hydroxyalkanoate units in the total monomer units constituting the poly(3-hydroxybutyrate) copolymer (B) is preferably from 10 to less than 24 mol%, more preferably from 10 to less than 20 mol%, and even more preferably from 10 to less than 18 mol% in order to ensure both good meltability during the heating step and good productivity in production of the resin.

The average proportion of the other hydroxyalkanoate units in the total monomer units contained in the total poly(3-hydroxyalkanoate) resin component contained in the poly(3-hydroxyalkanoate) resin composition is preferably from 5 to 18 mol%, more preferably from 6 to 16 mol%, even more preferably from 7 to 14 mol%, and particularly preferably from 8 to 12 mol% in order to ensure both good meltability during the heating step and good productivity in production of the resins.

The average proportion of certain monomer units in total monomer units constituting a poly(3-hydroxybutyrate) resin or a poly(3-hydroxyalkanoate) resin can be determined by a method known to those skilled in the art, such as the method described in paragraph [0047] of WO 2013/147139 A1. The term "average proportion" refers to the molar proportion of the certain monomer units in the total monomer units constituting the poly(3-hydroxybutyrate) resin or the poly(3-hydroxyalkanoate) resin. When the resin material to be analyzed is a mixture of two or more resins, the average proportion of certain monomer units refers to the molar proportion of those monomer units contained in the total mixture.

The weight-average molecular weight of the poly(3-hydroxybutyrate) copolymer (B) is not limited to a particularly range. In order to ensure both ease of application of the coating liquid and good mechanical properties of the coating layer, the weight-average molecular weight is preferably from $10 \times 10^4$ to $40 \times 10^4$ and more preferably from $20 \times 10^4$ to $35 \times 10^4$. The weight-average molecular weight can be measured by the method previously described.

A specific example of methods for producing the poly(3-hydroxybutyrate) copolymer (B) is described in WO 2010/013483 A1. Examples of commercially available PHBH include "Kaneka Biodegradable Polymer Green Planet™" of Kaneka Corporation.

The weight-average molecular weight of the total poly(3-hydroxyalkanoate) resin component contained in the coating layer is not limited to a particular range. In order to ensure both ease of application of the coating liquid and good mechanical properties of the coating layer, the weight-average molecular weight is preferably from $10 \times 10^4$ to less than $40 \times 10^4$ and more preferably from $20 \times 10^4$ to $35 \times 10^4$.

The coating layer may contain one or two or more of the following components to the extent that the contained components do not diminish the effect of the invention: resins other than P3HAs; adhesives; dispersants or emulsifiers; pH adjusters; inorganic fillers; colorants such as pigments and dyes; odor absorbers such as activated carbon and zeolite; flavors such as vanillin and dextrin; plasticizers; oxidation inhibitors; antioxidants; weathering resistance improvers; ultraviolet absorbers; nucleating agents; lubricants; mold release agents; water repellent agents; antimicrobial agents; and slidability improvers. These components are optional components, and the coating layer need not necessarily contain these components.

Resins other than P3HAs that may be used in the coating layer are not limited to a particular type, but biodegradable resins are preferred. Specific examples include: aliphatic polyester resins such as polycaprolactone, polybutylene succinate adipate, polybutylene succinate, and polylactic acid; and aliphatic-aromatic polyester resins such as polybutylene adipate terephthalate and polybutylene azelate terephthalate. The amount of such a resin other than P3HAs may be 50 parts by weight or less, 30 parts by weight or less, or 10 parts by weight or less, per 100 parts by weight of the P3HA(s) contained in the coating layer. The amount of the other resin may be 5 parts by weight or less or 1 part by weight or less.

The thickness of the coating layer is not limited to a particular range, and may be chosen as appropriate in view of the performance required of the coating layer and the productivity. For example, the thickness may be from 0.5 to 100 μm or from 1 to 30 μm.

The production method according to the present embodiment includes the step of applying the coating liquid and the step of forming the coating layer by heating, and these steps are carried out in this order.

The steps may be performed continuously while transferring a strip-shaped substrate along a production line. In this case, it is preferable that the step of feeding the substrate, the step of applying the coating liquid, the step of forming the coating layer by heating, and the step of winding the resulting laminate be performed in this order.

(Step of Feeding Substrate)

First, a substrate wound into a roll is prepared as a web. The substrate is continuously fed from this roll and transferred using a common transfer device for strip-shaped sheets. Along with this transfer of the substrate, the next application step and subsequent steps are continuously carried out.

Alternatively, a paper substrate may be continuously produced by a papermaking process, and the paper substrate may then be transferred without being wound into a roll to carry out the next application step and subsequent steps continuously.

The transfer speed of the substrate is not limited to a particular range, and may be set as appropriate in view of productivity. For example, the transfer speed may be from 1 to 200 m/min.

Before the next application step, the step of subjecting the substrate to a surface treatment such as corona treatment as described above may be performed.

(Step of Applying Coating Liquid)

A P3HA-containing aqueous coating liquid is applied to at least one side of the substrate being transferred, and thus a coat is formed on the at least one side of the substrate layer. This application step can be performed continuously.

The method for applying the aqueous coating liquid to the substrate is not limited to a particular technique, and any known technique can be used as appropriate. Specifically, a spray method, a spreading method, a slit coater method, an air knife coater method, a roll coater method, a bar coater method, a comma coater method, a blade coater method, a screen printing method, or a gravure printing method can be used.

The term "P3HA-containing aqueous coating liquid" refers to a liquid containing water in which at least resin particles containing a P3HA are dispersed. Components other than the resin particles may be dissolved or dispersed in the aqueous coating liquid as needed. When a coating layer is formed directly on a paper substrate by applying the aqueous coating liquid to the substrate, a portion of the coating liquid seeps into the paper substrate, which advantageously enhances the adhesion of the coating layer to the paper substrate.

The P3HA-containing aqueous coating liquid can be produced by the method described below, although the production of the liquid is not limited to this method. First, a microorganism is allowed to produce a P3HA within its cells, and the microbial cells containing the P3HA are then disrupted in an aqueous dispersion of the cells to separate the P3HA from the cells. This method can yield an aqueous dispersion of P3HA particles that substantially retain the fine particle size of the P3HA produced in the microbial cells.

When microbial cells containing a P3HA are disrupted in an aqueous dispersion of the cells to separate the P3HA from the cells, it is preferable to perform the disruption and the addition of an alkali simultaneously while stirring the P3HA-containing microbial cells. After the alkali has been added, the resulting cell dispersion preferably has a pH of 9 to 13.5. When the pH is 9 or higher, the P3HA can easily be separated from the cells. When the pH is 13.5 or lower, decomposition of the P3HA is likely to be avoided.

The microbial cell disruption may be accomplished using ultrasound or a device such as an emulsifying/dispersing machine, a high-pressure homogenizer, or a mill. Although the means for microbial cell disruption is not limited to those mentioned below, the use of an emulsifying/dispersing machine such as Silverson Mixer (manufactured by Silverson), Clearmix (manufactured by M Technique Co., Ltd.), or Ebara Milder (manufactured by Ebara Corporation) is preferred in order to dissolve out the P3HA from the cells by the alkali treatment, efficiently disrupt nucleic acids which are a primary cause of viscosity increase, and thoroughly disperse insoluble substances other than the P3HA, such as cell walls, cell membranes, and insoluble proteins.

The temperature during the microbial cell disruption and alkali addition preferably ranges from room temperature to 50°C. The temperature is preferably around room temperature since the P3HA is likely to decompose if the temperature is higher than 50°C.

The dispersion resulting from the disruption and alkali treatment of the microbial cells is centrifuged to give a precipitate. The precipitate is washed with water and, if necessary, with methanol, and finally a suitable amount of water is added. In this manner, an aqueous coating liquid containing the P3HA at a desired solids concentration can be obtained.

The step of applying mechanical shear to the obtained aqueous coating liquid to separate aggregated particles of the P3HA from one another may be performed. The application of mechanical shear is preferred in that it enables substantial elimination of aggregates, thereby yielding an aqueous coating liquid containing P3HA particles uniform in size. The application of mechanical shear to the aqueous coating liquid can be carried out, for example, by means such as a stirrer, a homogenizer, or ultrasound. At this point, the P3HA resin particles are not strongly aggregated; therefore, the use of a stirrer equipped with a common stirring blade is preferred in terms of simplicity.

The solids concentration of the P3HA in the aqueous coating liquid is preferably from 25 to 65 wt%, more preferably from 30 to 55 wt%, and particularly preferably from 35 to 50 wt%. When the solids concentration of the P3HA in the aqueous coating liquid is within this range, the coating liquid exhibits a moderate viscosity and can be applied evenly.

Another advantage is that the resulting coating layer can achieve a required thickness and is less likely to have defects.

In order to ensure both good P3HA productivity and good coating uniformity, the average particle size of the P3HA resin particles in the aqueous coating liquid is, for example, from 0.1 to 50 $\mu$m, preferably from 0.5 to 30 $\mu$m, and more preferably from 0.8 to 20 $\mu$m. When the average particle size is 0.1 $\mu$m or more, the P3HA can easily be obtained either by microbial production or by chemical synthesis. When the average particle size is 50 $\mu$m or less, uneven application of the aqueous coating liquid can be avoided.

The average particle size of the P3HA resin particles in the aqueous coating liquid can be measured by adjusting an aqueous suspension containing the P3HA resin particles to a given concentration and analyzing the suspension using a widely used particle size analyzer such as Microtrac particle size analyzer (FRA manufactured by Nikkiso Co., Ltd.). The average particle size is determined as the particle size at which the cumulative percentage on a normal distribution curve reaches 50% of all particles.

The aqueous coating liquid need not necessarily contain any emulsifier, but preferably contains an emulsifier to stabilize the coating liquid. Examples of the emulsifier include: anionic surfactants such as sodium lauryl sulfate and sodium oleate; cationic surfactants such as lauryl trimethyl ammonium chloride; non-ionic surfactants such as glycerin fatty acid esters and sorbitan fatty acid esters; polyvinyl alcohol; polyvinyl alcohol derivatives such as carboxy-modified polyvinyl alcohol, sulfonated polyvinyl alcohol, and ethylene-modified polyvinyl alcohol; cellulose derivatives such as methyl cellulose, carboxymethyl cellulose, hydroxyethyl cellulose, and hydroxypropyl cellulose; starch; starch derivatives such as oxidized starch and etherified starch; and water-soluble polymers such as chitin, chitosan, casein, and gum arabic. One of these emulsifiers may be used alone, or two or more thereof may be used in combination. Among the above examples, polyvinyl alcohol is preferred because its aqueous solution can easily be prepared when added to the coating liquid on an industrial scale.

The amount of the emulsifier added is not limited to a particular range, but is preferably from 1 to 10 wt% based on the solids content of the P3HA. When the amount of the emulsifier is 1 wt% or more, the stabilizing effect of the emulsifier is likely to be obtained. When the amount of the emulsifier is 10 wt% or less, physical property deterioration or coloring due to incorporation of an excess amount of emulsifier into the P3HA can be avoided.

The emulsifier can be added to the aqueous dispersion after the water washing following the centrifugation subsequent to the disruption and alkali treatment of the microbial cells. When methanol washing is carried out, the emulsifier can be added after the methanol washing and before or after a suitable amount of water is added to adjust the solids concentration of the P3HA.

The amount of the P3HA to be applied is not limited to a particular range, and can be chosen as appropriate in view of factors such the performance required of the coating layer and the productivity. Specifically, the amount of the applied P3HA, expressed as dry weight per square meter, is preferably from 1.0 to 80 g/m$^2$, more preferably from 5.0 to 60 g/m$^2$, and even more preferably from 10 to 50 g/m$^2$. When the amount of the applied P3HA is within such a range, the coating layer can be prevented from having defects such as pinholes, can have sufficient strength for practical use, and can effectively exhibit water resistance and oil resistance.

(Step of Forming Coating Layer by Heating)

In the heating step, the coat formed by the application step is heated until the surface temperature of the coat reaches 170°C or higher, and thus a coating layer is formed to obtain a laminate. In this step, water is evaporated and the P3HA resin particles contained in the aqueous coating liquid are fused together. In this manner, a resin layer having relatively high uniformity can be formed. As a result, a coating layer possessing specific melting characteristics described later can be formed.

The P3HA resin particles can be fully fused together by heating the coat until its surface temperature reaches 170°C or higher. This can reduce defects in the coating layer, thereby enabling the resulting laminate to exhibit high water resistance and high oil resistance.

The upper limit of the surface temperature of the coat may be set as appropriate by those skilled in the art. To avoid various problems such as reduced mechanical strength and breakage of the resulting laminated sheet which arise from excessive drying of the substrate layer or thermal decomposition of the P3HA, the surface temperature is preferably lower than 200°C and more preferably lower than 190°C. The surface temperature may be lower than 180°C.

The heating step can be carried out using a known heating technique, examples of which include hot air heating, infrared heating, microwave heating, roll heating, and hot plate heating. One of these techniques may be used alone, or two or more thereof may be used in combination.

The heating step can be carried out continuously using a device commonly employed in paper coating processes. Specifically, the heating step can be accomplished by passing the substrate with the coat on one side through a drying oven adjusted to a specified temperature. Alternatively, the substrate with the coat on one side may be brought into contact with a roll adjusted to a specified temperature, or pressed between such temperature-adjusted rolls.

In order for the surface temperature of the coat to reach the target temperature of 170°C or higher, the heating device is preferably set to a temperature higher than the target temperature. However, if the set temperature of the heating device is excessively high, controlling the surface temperature becomes difficult. Accordingly, the set temperature is preferably about 10 to 20°C above the target temperature.

Heating at the set temperature as described above is preferably continued for 1 minute or longer. Heating the coat for at least 1 minute ensures that its surface temperature reaches the target temperature. The heating time is preferably 1.5 minutes or longer. The upper limit of the heating time is not limited to a particular value. In terms of productivity, the heating time is preferably up to 3 minutes.

Patent Literature 2 discloses an example in which, after application of a coating liquid, the resulting coat was heated for 10 seconds using a drying oven with its temperature set to 190°C to form a resin layer. Considering the very short heating time, it is inferred that the surface temperature of the coat did not reach 170°C or higher.

In the laminate produced according to the present embodiment, the P3HA-containing coating layer exhibits at least one peak top temperature (Tmb) in the range of 155 to 175°C on a crystalline melting curve obtained by differential scanning calorimetry. The resin component that exhibits such a peak top temperature Tmb acts as crystal nuclei, which serve to accelerate solidification of the P3HA after the heating step. As a result, blocking between different portions of the laminate can be prevented. When no peak top temperature exists in the range above 155°C, blocking is likely to occur. The Tmb preferably lies in the range of 160 to 170°C.

Preferably, the coating layer further exhibits at least one peak top temperature (Tma) in the range of 100 to 155°C, in addition to the Tmb. The resin component exhibiting such a peak top temperature Tma easily melts during the heating step. Accordingly, the coating layer readily becomes uniform as a result of the heating, so that the water resistance and oil resistance of the laminate can be further improved. The Tma preferably lies in the range of 110 to 145°C, more preferably in the range of 120 to 135°C.

The difference between the temperatures Tma and Tmb is not limited to a particular range, but is preferably 10°C or more, more preferably 20°C or more, even more preferably 25°C or more, and particularly preferably 30°C or more. The upper limit of the difference between the temperatures Tma and Tmb is not limited to a particular value. In terms of ease of production, the difference may be, for example, up to 60°C, and is preferably up to 50°C.

In the present specification, peak top temperatures on a crystalline melting curve obtained by differential scanning calorimetry are defined as follows. An aluminum pan is charged with 2 to 5 mg of the coating layer to be analyzed and is placed in a differential scanning calorimeter, in which the resin is melted by heating from 20 to 190°C at a rate of 10°C/min under a stream of nitrogen to obtain a crystalline melting curve. On the obtained crystalline melting curve, the top temperature of a melting point peak appearing in the range of 100 to 155°C is defined as the Tma, and the top temperature of a melting point peak appearing in the range of 155 to 175°C is defined as the Tmb. When a plurality of melting point peaks are observed in the range of 100 to 155°C, the top temperature of the highest of the peaks is defined as the Tma. When a plurality of melting point peaks are observed in the range of 155 to 175°C, the top temperature of the highest of the peaks is defined as the Tmb.

The laminate including the coating layer that exhibits such melting characteristics can be produced, for example, by controlling the composition of the P3HA contained in the coating layer as described above, and by heating the coat in the temperature range specified above.

(Step of Winding Laminate)

The laminate obtained through the above steps is wound onto a winding roller; thus, the laminate can be obtained in the form of a roll. In the present embodiment, since the coating layer exhibits the specific melting characteristics described above, blocking between different portions of the wound laminate can be prevented. Accordingly, after the winding step, the laminate can be fed from the roll without resistance.

In the laminate that can be produced according to the present embodiment, the coating layer is preferably an outermost layer. In this case, the coating layer can function as a heat-sealable layer, a water-resistant layer, and/or an oil-resistant layer.

The heat-sealable layer is a layer suitable for heat sealing. Specifically, the heat-sealable layer is a layer that can be bonded to a bonding target by thermal pressure bonding. The bonding target may be another portion of the same heat-sealable layer, may be the substrate, or may be an article made of a different material.

In another aspect of the present disclosure, an additional layer may be located on the coating layer. In this case, the coating layer can function as an anchor coat layer between the substrate and the additional layer. The additional layer is not limited to a particular type, and may be another resin layer or an inorganic layer.

On the side of the laminate opposite the coating layer, the surface of the substrate layer may be exposed. Alternatively, an additional layer may be located on the surface of the substrate layer. The additional layer may be a layer classifiable as the coating layer or may be a layer other than the coating layer.

[Molded Article]

The laminate that can be produced according to the present embodiment (hereinafter also referred to as the "present laminate") can be molded into an article having a given shape (hereinafter also referred to as the "present molded article"). The molded article includes the laminate and has a desired size and shape. Being made with the laminate including the coating layer containing a P3HA, the present molded article is beneficial for various purposes.

The present molded article is not limited to a particular product and may be any product including the present laminate. Examples include paper, a film, a sheet, a tube, a plate, a rod, a container (e.g., a bottle), a bag, and a part. In terms of addressing marine pollution, the present molded article is preferably a packaging bag, a lidding material, or a container such as a cup or tray.

In one embodiment of the present disclosure, the present molded article may be the present laminate itself, or may be an article produced through secondary processing of the present laminate.

The present molded article including the present laminate subjected to secondary processing is suitable for use as any of various packaging materials or containers such as shopping bags, various other kinds of bags, packaging materials for foods or confectionery products, cups, trays, and cartons. That is, the present molded article is suitable for use in diverse fields such as food industry, cosmetic industry, electronic industry, medical industry, and pharmaceutical industry. Since the present laminate has high adhesion to the substrate and good heat resistance, the present molded article is more preferably used as a container for a hot substance. Examples of such containers include: liquid containers such as, in particular, cups for foods or beverages such as instant noodles, instant soups, and coffee; and trays used for prepared foods, boxed lunches, or microwavable foods. Since the present laminate has excellent water resistance and oil resistance, it is well suited as a packaging material for packaging foods containing water or oil.

The secondary processing as described above can be carried out using a method identical to that used for secondary processing of conventional resin-laminated paper or coated paper. That is, the secondary processing can be performed by means such as any type of bag-making machine or form-fill-seal machine. Alternatively, the present laminate may be processed using a device such as a paper cup molding machine, a punching machine, or a case former. In any of these processing machines, any known technique can be used for bonding of the present laminate. Examples of techniques that can be used include heat sealing, impulse sealing, ultrasonic sealing, high-frequency sealing, hot air sealing, and flame sealing.

The heat sealing can be carried out by heating the present laminate and thus subjecting at least a portion of the coating layer of the present laminate to thermal fusion. The term "thermal fusion" refers to a process in which at least a portion of the coating layer is thermally melted and fused to another surface. The other surface may be, but is not limited to, the surface of the coating layer of the preset laminate, the surface of the substrate layer of the present laminate, or the surface of an article other than the present laminate.

The heat sealing temperature at which the present laminate is heat-sealed depends on the bonding technique used. For example, in the case where the present laminate is heat-sealed using a heat sealing tester equipped with a sealing bar, the heat sealing temperature may be set such that the surface temperature of the coating layer is typically 200°C or lower, preferably 180°C or lower, and more preferably 160°C or lower. When the surface temperature of the coating layer falls within this range, melting and leakage of the resin in the vicinity of the sealed portion can be avoided to ensure a suitable thickness of the coating layer and a sufficient seal strength. The surface temperature may be 150°C or lower or 140°C or lower since the present laminate can exhibit good bonding performance even when heat-sealed at a low temperature. In the case of using a heat sealing tester equipped with a sealing bar, the surface temperature is typically at least 100°C, preferably at least 110°C, and more preferably at least 120°C. When the surface temperature falls within this range, suitable bonding at the sealed portion can be achieved.

The heat sealing pressure at which the present laminate is heat-sealed depends on the bonding technique used. For example, in the case where the present laminate is heat-sealed using a heat sealing tester equipped with a sealing bar, the heat sealing pressure is typically 0.1 MPa or more and preferably 0.5 MPa or more. When the heat sealing pressure falls within this range, suitable bonding at the sealed portion can be achieved. In the case of using a heat sealing tester equipped with a sealing bar, the heat sealing pressure is typically up to 1.0 MPa and preferably up to 0.75 MPa. When the heat sealing pressure falls within this range, thinning of the sealed edge can be avoided to ensure a sufficient seal strength.

For the purpose of physical property improvement, the present molded article may be combined with another molded article (such as a fiber, a yarn, a rope, a woven fabric, a knit, a non-woven fabric, paper, a film, a sheet, a tube, a plate, a rod, a container, a bag, a part, or a foam) made of a material different from that of the present molded article. The material of the other molded article is also preferably biodegradable.

In the following items, preferred aspects of the present disclosure are listed. The present invention is not limited to the following items.

[Item 1]

A laminate production method for producing a laminate including a substrate layer and a coating layer located on at least one side of the substrate layer, the method including the steps of:

applying an aqueous coating liquid containing a poly(3-hydroxyalkanoate) resin composition to a substrate to form a coat; and
heating the coat until a surface temperature of the coat reaches 170°C or higher to form the coating layer, wherein the coating layer exhibits a peak top temperature (Tmb) in a range of 155 to 175°C on a crystalline melting curve obtained by differential scanning calorimetry.

[Item 2]

The laminate production method according to item 1, wherein the coating layer further exhibits a peak top temperature (Tma) in a range of 100 to 155°C on the crystalline melting curve obtained by differential scanning calorimetry.

[Item 3]

The laminate production method according to item 1 or 2, wherein the poly(3-hydroxyalkanoate) resin composition contains a poly(3-hydroxybutyrate) (A).

[Item 4]

The laminate production method according to item 3, wherein an amount of the poly(3-hydroxybutyrate) (A) is from 13 to 22 wt% of a total poly(3-hydroxyalkanoate) resin component contained in the poly(3-hydroxyalkanoate) resin composition.

[Item 5]

The laminate production method according to item 3 or 4, wherein the poly(3-hydroxyalkanoate) resin composition further contains a poly(3-hydroxybutyrate) copolymer (B) having 3-hydroxybutyrate units and other hydroxyalkanoate units.

[Item 6]

The laminate production method according to item 5, wherein a proportion of the other hydroxyalkanoate units in the poly(3-hydroxybutyrate) copolymer (B) is from 10 to less than 24 mol%.

[Item 7]

The laminate production method according to item 5 or 6, wherein an average proportion of the other hydroxyalkanoate units in a total poly(3-hydroxyalkanoate) resin component contained in the poly(3-hydroxyalkanoate) resin composition is from 5 to 18 mol%.

[Item 8]

The laminate production method according to any one of items 1 to 7, wherein a weight-average molecular weight (Mw) of a total poly(3-hydroxyalkanoate) resin component contained in the poly(3-hydroxyalkanoate) resin composition is from $10 \times 10^4$ to less than $40 \times 10^4$.

[Item 9]

The laminate production method according to any one of items 1 to 8, further including the step of winding the laminate into a roll.

[Item 10]

A molded article production method including the steps of:

producing a laminate by the laminate production method according to any one of items 1 to 9; and
subjecting at least a portion of the coating layer to thermal fusion.

**Examples**

Hereinafter, the present invention will be specifically described based on examples. The technical scope of the present invention is not limited by the examples given below.

Materials used in Examples and Comparative Examples are listed below.

[Poly(3-Hydroxyalkanoate) Resins (P3HA Resins)]

$$\text{PHB: Poly(3-hydroxybutyrate) (weight-average molecular weight} = 35 \times 10^4 \text{ g/mol)}$$

This resin was produced according to the method described in Comparative Example 1 of WO 2004/041936 A1.

P3HB3HH-11: P3HB3HH (average 3HB/3HH ratio = 89/11 (mol%/mol%), weight-average molecular weight = 26 $\times$ $10^4$ g/mol)

This resin was produced according to the method described in WO 2008/010296 A1.

The average 3HH proportion shown in Table 1 for cases where a mixture of two or more poly(3-hydroxyalkanoate) resins was used as the poly(3-hydroxyalkanoate) resin component is an average value calculated from the proportion of 3HH in each poly(3-hydroxyalkanoate) resin and the weight proportions of the poly(3-hydroxyalkanoate) resins.

The monomer proportions and weight-average molecular weights of the P3HA resins were measured by the methods described below.

<Measurement of Monomer Proportions of P3HB3HH>

The monomer proportions of P3HB3HH were determined as follows. To about 20 mg of P3HB3HH were added 1 mL of sulfuric acid-methanol mixture (15:85) and 1 mL of chloroform, and the receptacle was tightly closed. The contents were heated at 100°C for 140 minutes to obtain a methyl ester of P3HB3HH decomposition product. After cooling, 0.5 mL of deionized water was added. The methyl ester and the deionized water were thoroughly mixed, and the mixture was left until it divided into an aqueous layer and an organic layer. The organic layer was then separately collected, and the monomer unit composition of the P3HB3HH decomposition product in the organic layer was analyzed by capillary gas chromatography. The proportion of 3-hydroxyhexanoate was calculated from a peak area obtained by the chromatography.

<Measurement of Weight-Average Molecular Weights>

The weight-average molecular weights of P3HB3HH and PHB were measured as follows. First, the resin to be analyzed was dissolved in chloroform, and the resulting solution was heated in a hot water bath at 60°C for 0.5 hours. The heated solution was filtered through a disposable filter made of PTFE and having a pore diameter of 0.45 $\mu$m, and the filtrate was then subjected to GPC analysis under the conditions listed below to determine the weight-average molecular weight.

GPC system: High-performance liquid chromatograph 20A system manufactured by Shimadzu Corporation
Columns: K-G 4A (one column) and K-806M (two columns) manufactured by Showa Denko K.K.
Sample concentration: 1 mg/ml
Eluent: Chloroform solution
Eluent flow rate: 1.0 ml/min
Volume of injected sample: 100 $\mu$L
Analysis time: 30 minutes
Standard sample: Standard polystyrene

[Resin Dispersions and Aqueous Coating Liquids]

Resin dispersions containing the P3HA resins at a solids concentration of 50 wt% were obtained according to the method described in WO 2015/146195 A1.

A 2% aqueous solution of methylcellulose (METOLOSE SM-400, manufactured by Shin-Etsu Chemical Co., Ltd.) was added to each resin dispersion such that the amount of methylcellulose was 1 part by weight per 100 parts by weight of the resins contained in the dispersion, and the resulting mixture was stirred. In this manner, aqueous coating liquids were obtained.

Evaluation procedures carried out in Examples and Comparative Examples are described below.

[Measurement of Temperature Reached by Coat Surface]

The temperature reached by the coat surface was measured as follows. Thermo Label™ (manufactured by NiGK Corporation) was attached to the coated surface of paper, then the paper bearing the label was passed through a heating oven under the conditions of coating formation, and the temperature indicated by the label was determined as the temperature reached by the coat surface.

[Blocking Resistance after Winding of Coated Paper]

Paper was coated with the aqueous coating liquid using a gravure coater. The resulting coat was then heated to form a coating layer, and the coated paper was wound into a roll. Thereafter, the coated paper was unwound, and the degree of sticking (blocking) between the coated surface and the uncoated surface was evaluated.

<Evaluation Criteria>

Good: The coated paper was able to be unwound uniformly.
Average: Slight sticking occurred, but the coated paper was able to be unwound uniformly without defects or breakage of the coating layer.
Poor: Severe sticking occurred, and the coated paper was not able to be unwound due to material failure associated with the unwinding process.

[Evaluation of Water Resistance of Coated Paper]

The water absorptiveness (Cobb value) of the coated paper was measured according to "Paper and board-Determination of water absorptiveness-Cobb method" specified in JIS P 8140: 1998. Specifically, water at room temperature was brought into contact with the coated paper at two selected points on the surface of the coating layer for 1800 seconds, after which the water absorptiveness (Cobb value) at each point was measured.
The average of the two measured values of water absorptiveness (Cobb value) was used as a water resistance index, and the water resistance of the coated paper was evaluated according to the criteria set forth below. The rating "Good" means that the water resistance is sufficient for practical use.

<Evaluation Criteria>

Good: The average of the values of water absorptiveness (Cobb value) was 3 g/m$^2$ or less.
Poor: The average of the values of water absorptiveness (Cobb value) was more than 3 g/m$^2$ and up to 10 g/m$^2$.

[Evaluation of Oil Resistance of Coated Paper]

The coated paper was sprayed with Ageless Seal Check Solution (manufactured by Mitsubishi Gas Chemical Company, Inc.) at two selected points within an A4-sized area on the surface of the coating layer. After 120 seconds, the coated paper was inspected to determine whether the solution penetrated to the side opposite the sprayed side.
For each of the two tested points, oil resistance was evaluated according to the criteria set forth below. When the rating was "Good" or "Average", the oil resistance was determined to be sufficient for practical use.

<Evaluation Criteria>

Good: No penetration of Ageless Seal Check Solution to the opposite side was observed.
Average: No penetration of Ageless Seal Check Solution to the opposite side was observed; however, the coating layer was partially smeared.
Poor: Penetration of Ageless Seal Check Solution to the opposite side was observed at one or more locations.

[Heat Sealing Adhesion between Different Portions of Coating Layer]

Each sheet of coated paper was cut into a 25-mm-wide strip. Different portions of the coating layer of the strip of coated paper were pressure-bonded to each other using a heat sealer (TP-701-B, manufactured by Tester Sangyo Co., Ltd.) under the following conditions: a heating temperature of 120°C, 140°C, 160°C, 180°C, or 200°C; a surface pressure of 0.1 MPa; and a sealing time of 0.5 seconds. Two seconds after the heat-sealing bar was moved away from the coated paper, the heat-sealed surfaces were peeled apart by hand. The peeled surfaces were visually inspected, and their state was evaluated according to the criteria set forth below. When the peeled state was rated as "Good" or "Average", the heat sealing adhesion was determined to be sufficient for practical use.

<Evaluation Criteria>

Good: The paper underwent material failure.
Average: A portion of the paper underwent material failure.
Poor: The paper did not undergo material failure.

[Amount of Resin Portion per Square Meter of Coating Layer]

Each sheet of coated paper was cut into a 10 cm × 10 cm piece, whose weight was measured. The weight of the substrate paper was subtracted from the measured weight. The resulting difference was multiplied by 100 to determine the amount of the resin portion per square meter.

[Differential Scanning Calorimetry]

An aluminum pan was charged with 2 to 5 mg of the resin portion of the coating layer and placed in a differential scanning calorimeter, in which the resin portion was melted by heating from 20 to 190°C at a rate of 10°C/min under a stream of nitrogen to obtain a crystalline melting curve.
On the obtained crystalline melting curve, the top temperature of a melting point peak appearing in the range of 100 to below 155°C was determined as Tma.
The top temperature of a melting point peak appearing in the range of 155 to 175°C was determined as Tmb. When a plurality of melting point peaks were observed in the range of 155 to 175°C, the melting point temperature of the highest of the peaks was determined as Tmb.

(Example 1)

A blend of 86.5 parts by weight of P3HB3HH-11 and 13.5 parts by weight of PHB was prepared as a P3HA resin component, and the blend was used to produce an aqueous coating liquid. The aqueous coating liquid was applied using a gravure coater to bleached kraft paper with a grammage of 50 g/m$^2$ (Starpack A, manufactured by Marusumi Paper Co., Ltd.), and the applied coat was heated in a hot-air oven set to 180°C for 2 minutes under conditions where the surface temperature of the coat reached 170°C, thereby forming a coating layer. The amount of the resin portion per square meter was 15 g/m$^2$.
The resulting coated paper was subjected to differential scanning calorimetry to measure the top temperatures of melting point peaks (Tma and Tmb). In addition, the coated paper was evaluated for blocking resistance after winding, water resistance, oil resistance, and heat sealing adhesion. The results are shown in Table 1.

(Examples 2 to 4 and Comparative Examples 1 to 4)

Coating layers were formed and sheets of coated paper were produced in the same manner as in Example 1, except that the resin formulation and the temperature reached by the surface of the coating layer were changed as shown in Table 1. The measurement and evaluation procedures were performed in the same manner as in Example 1, and the results are summarized in Table 1.

[Table 1]

| | | | Ex. 1 | Ex. 2 | Ex. 3 | Ex. 4 | Comp. 1 | Comp. 2 | Comp. 3 | Comp. 4 |
|---|---|---|---|---|---|---|---|---|---|---|
| P3HA resins | P3HB3HH-11 | (parts by weight) | 86.5 | 85 | 79 | 76 | 94 | 88 | 85 | 85 |
| | PHB | (parts by weight) | 13.5 | 15 | 21 | 24 | 6 | 12 | 15 | 15 |
| | Average 3HH proportion | (mol%) | 9.5 | 9.3 | 8.7 | 8.4 | 10.3 | 9.7 | 9.3 | 9.3 |
| Formation of coating layer | Reached surface temperature | (°C) | 170 | 170 | 170 | 170 | 170 | 170 | 160 | 140 |
| Characteristics of coating layer | $T_{ma}$ | (°C) | 125 | 125 | 125 | 125 | 120 | 120 | Not measured | Not measured |
| | $T_{mb}$ | (°C) | 163 | 164 | 164 | 164 | Not observed | (152) | Not measured | Not measured |
| Evaluation results | Blocking resistance | | Average | Good | Good | Good | Poor | Poor | Good | Good |
| | Water resistance | | Good | Good | Good | Good | Good | Good | Good | Poor |
| | Oil resistance | | Good | Good | Good | Average | Good | Good | Poor | Poor |
| | Heat sealing adhesion (heat sealing temperature) | 120°C | Good | Good | Average | Average | Good | Good | Good | Good |
| | | 140°C | Good | Good | Good | Average | Good | Good | Good | Good |
| | | 160°C | Good | Good | Good | Good | Good | Good | Good | Good |
| | | 180°C | Good | Good | Good | Good | Poor | Good | Good | Good |
| | | 200°C | Good | Good | Good | Good | Poor | Good | Good | Good |

EP 4 778 724 A1

The results of Examples 1 to 4 demonstrate that when the surface temperature reached during heating for coating formation was 170°C, which exceeds the melting points of the resins, the resulting coated paper exhibited excellent blocking resistance after winding, as well as excellent water resistance and oil resistance and excellent heat sealing adhesion over a wide range of heat sealing temperatures. For Examples 1 to 4, it is inferred that crystals having a Tmb of 163°C or 164°C and a high melting point of 155°C or higher were present and acted as crystal nuclei to accelerate solidification of the molten resin material, thereby enabling the coated paper to exhibit good blocking resistance, water resistance, oil resistance, and heat-sealability.

In contrast, in Comparative Examples 1 and 2, in which no Tmb was observed or the peak top temperatures were below 155°C, the coated paper exhibited poor blocking resistance. Furthermore, in Comparative Example 1, heat-sealability at higher temperatures was also inferior.

As for Comparative Examples 3 and 4, in which the amount of PHB was the same as that in Example 2, it is inferred that since the temperature reached by the coat surface during coating layer formation was lower, resin melting was insufficient and, as a result, the formed coating layer had defects such as pinholes which led to poor oil resistance or poor water resistance.

## Claims

1. A laminate production method for producing a laminate including a substrate layer and a coating layer located on at least one side of the substrate layer, the method comprising the steps of:

   applying an aqueous coating liquid containing a poly(3-hydroxyalkanoate) resin composition to a substrate to form a coat; and
   heating the coat until a surface temperature of the coat reaches 170°C or higher to form the coating layer, wherein the coating layer exhibits a peak top temperature (Tmb) in a range of 155 to 175°C on a crystalline melting curve obtained by differential scanning calorimetry.

2. The laminate production method according to claim 1, wherein the coating layer further exhibits a peak top temperature (Tma) in a range of 100 to 155°C on the crystalline melting curve obtained by differential scanning calorimetry.

3. The laminate production method according to claim 1 or 2, wherein the poly(3-hydroxyalkanoate) resin composition contains a poly(3-hydroxybutyrate) (A).

4. The laminate production method according to claim 3, wherein an amount of the poly(3-hydroxybutyrate) (A) is from 13 to 22 wt% of a total poly(3-hydroxyalkanoate) resin component contained in the poly(3-hydroxyalkanoate) resin composition.

5. The laminate production method according to claim 3, wherein the poly(3-hydroxyalkanoate) resin composition further contains a poly(3-hydroxybutyrate) copolymer (B) having 3-hydroxybutyrate units and other hydroxyalkanoate units.

6. The laminate production method according to claim 5, wherein a proportion of the other hydroxyalkanoate units in the poly(3-hydroxybutyrate) copolymer (B) is from 10 to less than 24 mol%.

7. The laminate production method according to claim 5, wherein an average proportion of the other hydroxyalkanoate units in a total poly(3-hydroxyalkanoate) resin component contained in the poly(3-hydroxyalkanoate) resin composition is from 5 to 18 mol%.

8. The laminate production method according to claim 1 or 2, wherein a weight-average molecular weight (Mw) of a total poly(3-hydroxyalkanoate) resin component contained in the poly(3-hydroxyalkanoate) resin composition is from $10 \times 10^4$ to less than $40 \times 10^4$.

9. The laminate production method according to claim 1 or 2, further comprising the step of winding the laminate into a roll.

10. A molded article production method comprising the steps of:

producing a laminate by the laminate production method according to claim 1 or 2; and
subjecting at least a portion of the coating layer to thermal fusion.

## INTERNATIONAL SEARCH REPORT

| International application No. |
|---|
| **PCT/JP2024/027910** |

**A. CLASSIFICATION OF SUBJECT MATTER**

**B32B 27/36**(2006.01)i; **B05D 7/24**(2006.01)i; **C08L 67/04**(2006.01)i
FI:  B32B27/36; B05D7/24 302V; C08L67/04

According to International Patent Classification (IPC) or to both national classification and IPC

**B. FIELDS SEARCHED**

Minimum documentation searched (classification system followed by classification symbols)

B32B1/00-43/00; B05D1/00-7/26; C08K3/00-13/08; C08L1/00-101/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2022-185708 A (KANEKA CORP.) 15 December 2022 (2022-12-15)<br>claims, paragraphs [0015]-[0059], [0069]-[0076], examples | 1-10 |
| X | WO 2023/063217 A1 (KANEKA CORP.) 20 April 2023 (2023-04-20)<br>paragraphs [0016]-[0083], examples | 1-10 |
| A | WO 2022/059592 A1 (KANEKA CORP.) 24 March 2022 (2022-03-24)<br>whole document | 1-10 |
| A | WO 2010/013483 A1 (KANEKA CORP.) 04 February 2010 (2010-02-04)<br>whole document | 1-10 |
| A | JP 2022-47236 A (KANEKA CORP.) 24 March 2022 (2022-03-24)<br>whole document | 1-10 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **26 September 2024** | **08 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/027910**

| Patent document cited in search report | | | Publication date (day/month/year) | Patent family member(s) | | | Publication date (day/month/year) |
|---|---|---|---|---|---|---|---|
| JP | 2022-185708 | A | 15 December 2022 | (Family: none) | | | |
| WO | 2023/063217 | A1 | 20 April 2023 | CN | 118076445 | A | |
| WO | 2022/059592 | A1 | 24 March 2022 | US | 2023/0332356 | A1 | |
| | | | | EP | 4215366 | A1 | |
| | | | | CN | 116940467 | A | |
| WO | 2010/013483 | A1 | 04 February 2010 | US | 2011/0190430 | A1 | |
| | | | | EP | 2330157 | A1 | |
| | | | | CN | 102112559 | A | |
| JP | 2022-47236 | A | 24 March 2022 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022059592 A1
- JP 2022185708 A
- WO 2013147139 A1
- WO 2010013483 A1
- WO 2004041936 A1
- WO 2008010296 A1
- WO 2015146195 A1